# EUROPEAN PATENT SPECIFICATION

(11) **EP 3 030 411 B1**
(45) Date of publication and mention of the grant of the patent: **14.11.2018**
(21) Application number: 14758660.6
(22) Date of filing: 22.07.2014
(51) Int. Cl.: B29D 30/30, B65H 20/34

(54) **METHOD AND APPARATUS FOR CONTROLLING THE DELIVERY OF A CONTINUOUS ELONGATED ELEMENT IN A PROCESS FOR BUILDING TYRES FOR VEHICLE WHEELS**
VERFAHREN UND VORRICHTUNG ZUR STEUERUNG DER ABGABE EINES KONTINUIERLICHEN LÄNGLICHEN ELEMENTS IN EINEM VERFAHREN ZUR HERSTELLUNG VON REIFEN FÜR FAHRZEUGRÄDER
PROCÉDÉ ET APPAREIL DE COMMANDE DE LA MISE EN PLACE D'UN ÉLÉMENT ALLONGÉ CONTINU DANS UN PROCESSUS DE FABRICATION DE PNEUS POUR ROUES DE VÉHICULES

(30) Priority: 05.08.2013 IT MI20131334
(43) Date of publication of application: 15.06.2016
(73) Proprietor: Pirelli Tyre S.p.A., 20126 Milano (IT)
(72) Inventor: AMURRI, Cesare Emanuele, I-20126 Milano (IT); LO PRESTI, Gaetano, I-20126 Milano (IT); MARCHINI, Maurizio, I-20126 Milano (IT)
(74) Representative: Brasca, Marco
(86) International application number: PCT/IB2014/063302
(87) International publication number: WO 2015/019221

(56) References cited:
- EP-A1- 1 595 838
- EP-A1- 1 647 394
- EP-A2- 0 344 928
- EP-A2- 1 022 118
- EP-A2- 1 318 006
- JP-A- 2002 205 857
- JP-A- 2009 184 760
- JP-A- 2011 042 426
- NL-C2- 2 001 509
- US-A- 3 989 565
- US-A- 4 915 282
- US-A1- 2009 152 388

## Description

The present invention has as object a method for controlling the delivery of a continuous elongated element. In particular, the present invention also refers to a process and an apparatus implementing such method.

A tyre for vehicle wheels generally comprises a carcass structure comprising at least one carcass ply having axially opposite end edges engaged with respective annular anchoring structures integrated in the zones normally identified with the name "beads". The carcass structure is associated with a belt structure comprising one or more belt layers, situated in radial superimposition with respect to each other and with respect to the carcass ply. In radially outer position with respect to the belt structure, a tread band made of elastomeric material is applied, like other semifinished products constituting the tyre. Respective sidewalls made of elastomeric material are also applied in axially outer position on the lateral surfaces of the carcass structure, each being extended from one of the lateral edges of the tread band up to the respective annular structure for anchoring to the beads. After the building of the green tyre, actuated by means of assembly of respective semifinished products, a moulding and vulcanising treatment is generally executed, aimed to determine the structural stabilisation of the tyre by means of cross-linking of the elastomeric material as well as to impart a desired band design on the tread band and possible indicia at the sidewalls.

With the term "elastomeric material", it is intended a composition comprising at least one elastomeric polymer and at least one reinforcement filler. Preferably, such composition also comprises additives such as cross-linking agents and/or plasticisers. Due to the presence of the cross-linking agents, such material can be cross-linked by means of heating, so as to form the final manufactured product.

By "semifinished product", it is intended an elongated element, i.e. an element in which one dimension is predominant with respect to the remaining ones. Preferably said elongated element is only made of elastomeric material or comprising further structural elements. Preferably said elongated element is delivered on a forming drum in order to form at least one tyre component.

The semifinished product is preferably defined by a "continuous elongated element" shaped as a strip with a flattened section. Preferably, the further structural elements comprise one or more textile or metallic reinforcement cords. Such reinforcement cords are preferably arranged parallel to each other and preferably they are extended along the longitudinal direction of the elongated element itself. Said continuous elongated element is preferably delivered in a circumferential sense on a forming drum, for example from a reel or from an extruder, to form multiple mutually adjacent and/or partially superimposed coils. Preferably, the continuous elongated element wound in coils forms a part of the tyre belt structure.

The document EP 1 595 838 shows for example a temporary storage device for a linear body comprising a plurality of temporary storage means provided with a plurality of upper rollers arranged parallel to each other along a lateral direction and free to rotate; a plurality of lower rollers are also provided, arranged below the spaces delimited between adjacent upper rollers, free to rotate and capable of being moved closer to and away from the upper rollers. The temporary storage means enclose a linear body that advances along a longitudinal direction around the upper rollers and the lower rollers to form a festoon. Guide means guide the linear body supplied from the outlet of one of the temporary storage means to an inlet of another of the temporary storage means.

The document NL 2001 509 illustrates an apparatus for applying a strip-like element on a drum for building tyres. The apparatus comprises a roller which supports the strip-like element wound in a coil and a storage (buffer) device. A control device controls the tension of the strip-like element and a delivery device serves to apply the strip-like element on the building drum. The storage device comprises an upper support provided with a plurality of idle rollers and a lower support provided with a plurality of idle rollers.

The Applicant has observed that, in the dynamic storage devices of the type illustrated in EP 1 595 838 and NL 2001 509, the continuous elongated element is made to move along a zigzag path (festoon), defined by a plurality of idle rollers, before reaching the device for applying the same on a forming drum. Said dynamic storage devices have the function of absorbing possible fluctuations and/or interruptions in the delivery of the elongated element by the reel on which it is wound, in a manner such that these do not affect the deposition that occurs more downstream on the forming drum. Said dynamic storage devices, as stated, usually comprise a plurality of idle rollers, around each of which the continuous elongated element is partially wound, and which are arranged in a manner such to delimit the abovementioned zigzag path.

Document JP 2009 184760 discloses accumulator means comprising a plurality of accumulators and each accumulator includes a fixed roller group comprising a plurality of top guide rollers attached to a side fixed frame and an elevating/lowering roller group comprising a plurality of bottom guide rollers attached to the side elevating/lowering frame. An endless carrying tape is wound around in a zigzag pattern alternately turning back between the top guide rollers and the bottom guide rollers. The accumulator means has a drive roller winding the endless carrying tape and a detector detecting the difference of height between the side elevating/lowering frame in one accumulator and the side elevating/lowering frame in the other accumulator and provides an elevating/lowering frame height adjusting means adjusting the difference of the height by controlling the drive roller through the signal of the detector.

Document EP1318006 discloses an arrangement having a rotating tire or belt construction drum, a spool wheel, which can apply tensile forces to the reinforcing element, and sensors, which determine the position of the element on the spool wheel and feed this to a control unit. The spool wheel is connected to a motor and the motor can brake or drive the wheel. At least two tensioning and guide rollers are arranged with a radial separation to the spool wheel, so the element forms a defined angle of at least 180°.

Document US4915282 discloses an inertia compensated festoon assembly useable to control the tension in a moving web that is subject to tension changes. The assembly includes a first inertia compensated multiple floating dancer roller festoon in series with an isolation driven roller and a second inertia compensated single floating dancer roller festoon.

The Applicant has observed that the tyres produced by means of the apparatuses illustrated above can have structural characteristics that do not reflect the design characteristics.

In particular, the Applicant has observed that the semifinished products produced starting from continuous elongated elements made of elastomeric material reinforced with textile or metallic cords, and managed by means of the use of the abovementioned storage (buffer) devices, are affected by the tensions/deformations sustained by said continuous elongated elements while they move through the storage devices themselves.

The Applicant has observed that this phenomenon is even more pronounced in the continuous elongated elements reinforced with cords of textile type, but it can also be present in the continuous elongated elements with reinforcement cords of metallic type.

In particular, the Applicant has observed that the semifinished products thus produced tend to change their own form after the assembly thereof and/or after the building of the entire tyre due to the residual tensions accumulated in the material during the passage into the storage device. More particularly, the Applicant has observed that, for the tyres built on forming drums, said semifinished products tend to recover their original form after the deposition thereof on said forming drum.

For example, the Applicant has observed that the tyres comprising components obtained by winding the continuous elongated elements in axially adjacent or partially superimposed coils on the forming drum - once freed from the support on which they have been built - tend to be radially contracted (belting), giving rise to coverings with a maximum running diameter less than the design diameter.

Said continuous elongated element indeed tends to recover its initial length in longer times than that of the delivery, i.e. it is unable to recover its initial length, discharging said tensions, during the brief passage from the dynamic storage device to the device for the application on the forming drum.

The Applicant has observed that such stretching is due in part to the tension difference between the entrance and the exit of the elongated element into/from the dynamic storage device. This difference is necessary for maintaining taut the free sections of material, comprised for example between idle rollers positioned on crosspieces, and for advancing the continuous elongated element, overcoming the rolling friction of the rollers themselves.

The Applicant has also observed that the passage of the continuous elongated element on the idle rollers of the storage device generates an undesired stretching in the elongated element itself.

In such context, the Applicant has felt the need to improve the productivity of the tyre building processes.

In such a manner, the Applicant has observed that, by increasing the length of the path inside the storage device, in a manner so as to arrange a greater quantity of continuous elongated element usable with every tyre building cycle, there is a further increase of the residual tensions within the continuous elongated element itself.

The Applicant has also observed that an increase of the advancing speed of the material within the path in the storage device, necessary for obtaining a greater delivery speed of the continuous elongated element and consequently a decrease of the building cycle time, involves a further stretching of the delivered material, since the rolling friction of the bearings that carry the rollers increases with the speed.

The Applicant has finally observed that said stretching increases in a substantially linear manner starting from the entrance up to the exit of the continuous elongated element into/from the storage device and that therefore said stretching is greater the higher the number of idle rollers, or rather the length of the zigzag path, i.e. the capacity of the device in temporarily storing the elongated element.

The Applicant has perceived that, by exerting an action of controlled driving on the continuous elongated element in one or more points of the zigzag path, it is possible to reduce the internal longitudinal tension of the continuous elongated element.

The Applicant has finally found that by interrupting the progression of the longitudinal tension of the continuous elongated element within the zigzag path, by means of at least one drive element placed in at least one point along said path, it is possible to control the tension of the continuous elongated element at the outlet of the storage device and consequently considerably decrease the deformations, due to the residual tensions, of the continuous elongated element present in the built tyre.

More specifically, according to one aspect, the present disclosure relates to a method for controlling the delivery of a continuous elongated element in a process for building tyres for vehicle wheels.

Preferably it is provided to arrange a continuous elongated element along a zigzag path defined by a plurality of idle rollers on which the continuous elongated element is partially wound.

Preferably it is provided to advance the continuous elongated element in a feed direction along said zigzag path. According to the invention it is provided to apply torque at at least one drive element placed along said zigzag path, in a manner such that the continuous elongated element is conducted in the feed direction and that the longitudinal tension in the continuous elongated element downstream of said drive element is reduced with respect to the longitudinal tension upstream of said drive element.

Preferably it is provided to deliver said continuous elongated element in proximity to a work station for building tyres.

According to to claim 1 the present invention relates to a process for building tyres for vehicle wheels.

According to claim 8 of the present invention relates to an apparatus for controlling the delivery of a continuous elongated element in a process for building tyres.

The Applicant deems that by employing the solutions in accordance with the present invention, it is possible to assemble the semifinished products constituted by said continuous elongated element, reducing to the minimum the risk that they can change their form after the building of the tyre and alter the performances of the latter.

The Applicant in fact deems that the action exerted by the drive elements, preferably defined by respective powered rollers, makes the longitudinal tension/deformation in the continuous elongated element instantaneously decrease, like a step, (otherwise such tension/deformation would continue to linearly increase up to the outlet) and therefore allows limiting the maximum tension/deformation at the outlet and thus the subsequent elastic return of said continuous elongated element.

The Applicant therefore deems that it is possible to increase the transit speed in the temporary storage device and the capacity thereof without generating excessive residual deformations.

The present invention, in at least one of the aforesaid aspects, can have one or more of the preferred characteristics that are described hereinbelow.

Preferably, each of the drive elements is a drive roller.

Preferably, the continuous elongated element comprises reinforcement threads. Preferably said reinforcement threads are textile, preferably polymer, preferably made of nylon.

Preferably, the reinforcement threads are longitudinally oriented along the lengthwise extension of the continuous elongated element.

Preferably, the continuous elongated element is wound in axially adjacent and/or partially superimposed circumferential coils preferably for the building of belt structures at 0°.

The elongated elements provided with the reinforcement threads as described above and used for the indicated purpose are those which are most affected by the damaging phenomena due to the generation of residual longitudinal tensions/deformations.

Preferably, the applied torque is comprised between about 1 Nm and about 3 Nm, more preferably between about 1,6 Nm and about 2,4 Nm.

Preferably, the drive force applied on the continuous elongated element at each of the drive elements is comprised between about 10 N and about 40 N, more preferably comprised between about 20 N and 30 N.

Such value is sufficient for "lightening" the tension/deformation immediately downstream of the drive element and hence also at the outlet of the zigzag path and at the same time is rather limited so as to prevent causing material damage, as at that point the material is subjected to a sudden variation of its stress condition.

Preferably, the applied torque/force is increased in proportion with the advancing speed of the continuous elongated element. The slope of the line representative of the tension/deformation in the continuous elongated element along the zigzag path and thus also the maximum value of the tension/deformation, which occurs at the outlet of said path, are proportional to the advancing speed (since the rolling friction of the bearings that carry the rollers increases with the speed). For this reason, in order to keep said maximum value within an acceptable value, the drive force (i.e. the height of the abovementioned step) is progressively increased as the advancing speed increases.

Preferably, the applied torque/force is increased in proportion with the number of idle rollers. Given the same slope of said line (i.e. of the advancing speed), the maximum value of the tension/deformation at the outlet is proportional to the number of rollers, i.e. to the length of the path and thus to the capacity of the storage device. For this reason, in order to maintain said maximum value within an acceptable value, the drive force (i.e. the height of the abovementioned step) is progressively increased as the capacity of the storage device increases.

Preferably, the drive elements are increased in proportion with the advancing speed of the continuous elongated element.

Preferably, the drive elements are increased in proportion with the number of idle rollers.

In this manner, the torque/drive force at every single drive point can be maintained substantially unchanged, in a manner so as to avoid causing damage to the material, but the overall value given by the sum of the forces applied in the various drive elements can be increased in proportion with the advancing speed and/or with the number of idle rollers.

Preferably, the length of the zigzag path and the elongated element arranged along the same is comprised between about 90m and about 130m, more preferably equal to about 110m. Such length is sufficient for completing a tyre building cycle even if upstream the supply of the elongated element is interrupted. This allows preventing the generation of tyres with interrupted deliveries, which must be scrapped.

Preferably, the number of idle rollers is comprised between about 50 and about 90, more preferably equal to about 70. Such number of rollers allows managing high lengths, like those mentioned above, while maintaining the device compact.

Preferably, an advancing speed of the continuous elongated element along the zigzag path is greater than about 100 m/min, more preferably equal to about 120 m/min.

Preferably, the advancing speed of the continuous elongated element along the zigzag path is greater than about 300 m/min, more preferably equal to about 400 m/min.

These speeds are such to respect the cycle time for building a tyre, both in conventional building processes and building processes that provide for the deposition of the semifinished products on forming drums.

Preferably, the torque of the motor is controlled in a manner proportional to the rotation speed of the drive element.

Preferably, the motor is programmed for delivering a torque proportional to the rotation speed of the drive element.

Preferably, the torque of the motor is linearly varied with the rotation speed of the drive element.

Preferably, when the elongated element is stopped, the motor gives a null contribution (remains idle); when however the speed increases, the torque of the motor progressively increases. In this manner, one is able to decouple the longitudinal force in outlet from the work speed.

Preferably, the torque curve is set/programmed beforehand.

Preferably, the motor and the respective (electronic) control part are independent elements with respect to the system for controlling the device and the apparatus. The motor works autonomously and therefore ensures structural simplicity for the device and the apparatus in its entirety.

Preferably, the motor delivers a maximum torque comprised between about 5 Nm and about 10 Nm.

Preferably, the torque of the motor in operation is maintained between about 0.5 Nm and about 3 Nm.

Preferably, the idle rollers are organised in a manner so as to confer a longitudinal static force (and thus a longitudinal static tension equal to the ratio between the longitudinal force and the section area of the continuous elongated element) to the continuous elongated element wound thereon. Such effect is obtained, for example, by moving the rollers away from each other. The abovementioned longitudinal static force is also present when the elongated element is immobile on its rollers, i.e. it does not advance in the feed direction, and the value of the longitudinal static force is constant for the entire length of said element. When instead the continuous elongated element is in motion, one adds to/subtracts from the longitudinal static force the force which increases substantially in a linear manner starting from the entrance up to the exit into/from the storage device (result of the driving operated downstream of the zigzag path and of the friction forces distributed along the zigzag path). It follows that at an initial section (inlet) of the zigzag path, the total longitudinal force (sum of the longitudinal static force, of the forces exerted by the idle rollers and of the the driving downstream) is less than the longitudinal static force and at a final section (outlet) of the zigzag path said total longitudinal force is greater than the longitudinal static force.

Preferably, the longitudinal force exerted on the continuous elongated element at an outlet of said elongated element from the zigzag path is less than about 60 N, more preferably less than about 50 N. Such value allows limiting the elastic return of the continuous elongated element.

Preferably, the difference of longitudinal force exerted on the continuous elongated element between an entrance of said continuous elongated element into the zigzag path and an exit from the zigzag path is less than about 30 N, more preferably less than about 20 N.

Preferably, the longitudinal force exerted on the continuous elongated element at an inlet of said elongated element in the zigzag path is greater than about 20 N, preferably greater than about 30 N. Such value of the longitudinal force in inlet ensures that the continuous elongated element maintains the engagement with the first idle rollers and remains guided in the zigzag path. The excessive decrease or cancelling of the longitudinal force in inlet would in fact lead to the disengagement of the elongated element from the idle rollers and hence to the stop of the apparatus.

The Applicant deems that employing the solutions according to the present invention (application of drive (force(s)) torque along the zigzag path by means of for example powered roller(s)) allows the following simultaneously: increasing the longitudinal force in inlet and decreasing the same in outlet given the same longitudinal static force imposed, or reducing the longitudinal static force by maintaining substantially the same longitudinal force in inlet, obtaining an even greater reduction of the longitudinal force in outlet.

In a preferred embodiment, the dynamic storage device comprises:
a base;
an upper support bar mounted above the base and carrying upper idle rollers of said plurality of idle rollers;
a lower support bar mounted above the base and carrying lower idle rollers of said plurality of idle rollers;
wherein said at least one drive element is arranged on the base, substantially below the lower support bar.

The continuous elongated element passes in succession from a roller of the upper support bar to a roller of the lower support bar in a manner so as to define said zigzag path.

The drive element mounted on the base in a spaced position with respect to the idle rollers of the two bars makes possible maintenance and/or replacement operations simple, quick and inexpensive.

Preferably, the upper support bar and the lower support bar are vertically movable along a support guide constrained to the base, and are moved away from each other by means of an actuator, preferably pneumatic. The action of the actuator confers the aforesaid longitudinal static force to the continuous elongated element wound on the idle rollers. The actuator in fact tends to move the bars away from each other, in opposition to the constraint provided by the elongated element which, wound on the idle rollers, is extended between said two bars.

Preferably, mechanisms connect the upper support bar to the lower support bar in a manner such that their two weights balance each other. In the absence of forces that stress them, i.e. if they are only subjected to their own weight, the two bars remain in equilibrium on the support guide without being moved upward or downward. The constraint is such that by moving the upper support bar (or lower support bar) upward, the lower (or upper) support bar is moved simultaneously and symmetrically downward and vice versa. The actuator, preferably pneumatic, is capable of exerting a force on the upper support bar (and/or on the lower support bar) in a manner so as to push said support bars simultaneously away from each other.

Preferably, the support guide has an elongated vertical shape and the two bars are slidably constrained thereto at the central portions thereof.

Preferably, the idle rollers are organised into at least two axially approached groups, with reference to an axial direction parallel to rotation axes of said idle rollers, wherein each of said at least two groups defines one of said successive sections. In other words, the idle rollers of one group define a respective section of the zigzag path. The idle rollers of each group are substantially arranged on a same plane and different groups are arranged on planes that are parallel and side-by-side. Therefore, the zigzag path is extended in a winding manner on a first plane and then subsequently on a different plane parallel and side-by-side the first and possibly on a third plane and so forth. Such solution allows limiting the linear size of the temporary storage device.

Preferably, the corresponding idle rollers of different groups are mounted coaxial on the same rotation axes. In other words, each rotation shaft, to which a rotation axis corresponds, carries - axially adjacent to each other - an idle roller of a first group, an idle roller of a second group, etc. (corresponding rollers). Such solution is simple and inexpensive since the different sections of the elongated element make use of the same shafts multiple times. In addition, such solution ensures that the sections are always aligned with each other without having to also manage the control of the fill factor of each single section.

Preferably, said idle rollers are organised in three axially approached groups so that each rotation shaft carries three rollers.

Preferably, each of the two bars is extended along a main extension direction, preferably horizontal, between a first side and a second side of the dynamic storage device.

Preferably, the abovementioned lower support bar carries a series of shafts with the parallel axes aligned along the main extension direction which is orthogonal to said shafts. Preferably, the abovementioned upper support bar carries a series of shafts with the parallel axes aligned along the main extension direction of the bar which is orthogonal to said shafts.

Preferably, the shafts of the lower support bar are vertically non-aligned with respect to those of the upper support bar.

Preferably, the zigzag path is extended between the upper support bar and the lower support bar in at least one first section which extends from the first side to the second side of the dynamic storage device and in one second section which extends from the second side to the first side of the dynamic storage device.

Preferably, a first drive element is arranged on the base, below end idle rollers placed at the second side of the dynamic storage device.

Preferably, the continuous elongated element, arriving from the first section, descends to the first drive element, is partially wound around said first drive element and then re-ascends towards the second section.

Preferably, the continuous elongated element reaches the reel on which it is wound, passes around at least one drawing-in roller and then is partially wound on an upper end idle roller close to the first side and axially close to the upper support bar before then descending towards a lower end idle roller close to the first side and axially close to the lower support bar and re-ascending towards a successive upper idle roller belonging to the same first plane.

Preferably, the elongated element continues in its winding extension on the first plane up to an upper end idle roller close to the second side and axially close to the upper support bar (thus defining the first section of the zigzag path) before then descending to a first drive element that lies on the base and is positioned in a manner such that the elongated element wound between the last idle roller and the roller of the first drive element is vertically aligned.

Preferably, the continuous elongated element is partially wound from below around the first drive element, climbs towards and is partially wound around an upper end idle roller close to the second side and axially moved away from the upper support bar, i.e. lying on a second plane side-by-side and parallel to the first.

Preferably, the elongated element continues in its winding extension on the second plane up to an upper end idle roller close to the first side (thus defining the second section of the zigzag path), before then descending to a second drive element that lies on the base and is positioned in a manner such that the elongated element wound between said idle roller and the roller of the second drive element is vertically aligned.

Preferably, the zigzag path is extended between the upper support bar and the lower support bar in a third section which extends from the first side to the second side of the dynamic storage device.

Preferably, the first section, the second section and the third section are axially side-by-side each other, with reference to an axial direction parallel to the axes of said idle rollers.

Preferably, a second drive element is arranged on the base, below end idle rollers placed at the first side of the dynamic storage device.

Preferably, the continuous elongated element, arriving from the second section, descends to the second drive element, is partially wound around said second drive element and then re-ascends towards the third section.

Preferably, the continuous elongated element is made to advance in succession;
- along a first section of the zigzag path;
- around a first drive element;
- along a second section of the zigzag path;
- around a second drive element;
- along a third section of the zigzag path.

Preferably, the continuous elongated element is partially wound from below around the second drive element, climbs towards and is partially wound around an upper end idle roller close to the first side and axially even more removed from the upper support bar, i.e. lying on a third plane side-by-side and parallel to the second.

Preferably, the elongated element continues in its winding extension on the third plane up to an upper end idle roller close to the second side (thus defining the third section of the zigzag path) before then leaving the zigzag path and being directed towards the applicator, preferably guided by at least one transmission roller.

The continuous elongated element is therefore extended from the first side towards the second side of the dynamic storage device, then from the second side towards the first side and then once again from the first side towards the second side. The longitudinal tensions in said continuous elongated element are therefore directed in opposite senses in the different sections (first and third section in one sense and second section in the opposite sense). The torque (which is discharged on the bars through the shafts of the idle rollers) generated by the stresses in the second section substantially cancels that generated by the first section. If the sections were equal in number, the cancellation would be complete. Such progression in alternate senses therefore reduces the stresses on the bars that tend to make them rotate with respect to the guide and ensures that the coupling between the bars and the guide and thus their mutual linear movement are correct.

Preferably, said at least one drive element has a rotation axis orthogonal to rotation axes of the idle rollers. Said rotation axis is horizontal and orthogonal to the rotation axes of the idle rollers so that the continuous elongated element, in the passage between the idle roller from which it comes and the drive element, is twisted in a manner so as to assume an orientation parallel to a radially external surface of said drive element, around which it is partially wound.

Preferably, said at least one drive element has an external diameter substantially equal to an axial pitch between an idle roller of a group and the corresponding idle roller of an axially adjacent group.

This allows moving the elongated element, during its partial winding around the drive element, a distance equal to the distance between the idle rollers of adjacent groups, so that the outgoing branch from the idle roller of a group to the drive element is parallel to the return branch from the drive element to the idle roller of the adjacent group. The drive element therefore correctly directs the elongated element towards the successive section of the zigzag path.

Preferably, said at least one drive element is axially placed between two of said groups. In other words, the rotation axis of the drive element is vertically aligned with the separation zone between the two idle rollers of two adjacent groups. In this manner, the abovementioned outgoing branch and return branch are vertical. Preferably, the first drive element and the second drive element are mutually offset. The first drive element is placed between the first and the second group and the second drive element is placed between the second and the third group. Each of the drive elements therefore correctly directs the continuous elongated element towards the successive section of the zigzag path.

Further characteristics and advantages will be clearer from the detailed description of a preferred but not exclusive embodiment of a plant and a process for building tyres for vehicle wheels in accordance with the present invention.

Such description will be set forth hereinbelow with reference to the set of drawings, provided only for exemplifying and hence non-limiting purposes, in which:
- figure 1 shows a top schematic view of a plant for manufacturing tyres for vehicle wheels according to the present invention;
- figure 2 shows a side elevation view of an apparatus belonging to the plant of figure 1 and of a first section of a continuous elongated element managed by said apparatus;
- figure 3 shows a view according to arrow "A" of the apparatus of figure 2;
- figure 4 shows a view according to arrow "B" of the apparatus of figure 2
- figure 5 shows the side elevation view of figure 2 and of a second section of the continuous elongated element;
- figure 6 shows a view according to arrow "C" of the apparatus of figure 5;
- figure 7 shows the side elevation view of figure 2 and of a third section of the continuous elongated element;
- figure 8 shows a view according to arrow "D" of the apparatus of figure 7;
- figure 9 is a radial half-section of a tyre for vehicle wheels obtained with the process and the apparatus of the present invention;
- figure 10 shows a perspective view in section of a continuous elongated element in a preferred embodiment.

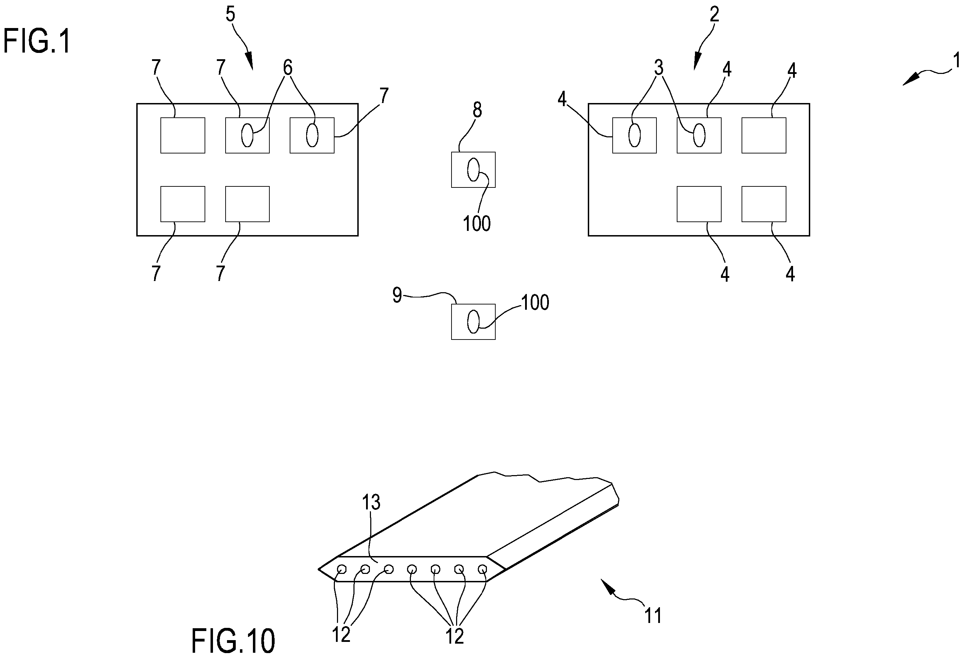

With reference to figure 1, reference number 1 indicates overall a plant for manufacturing tyres 100 for vehicle wheels in accordance with the present invention.

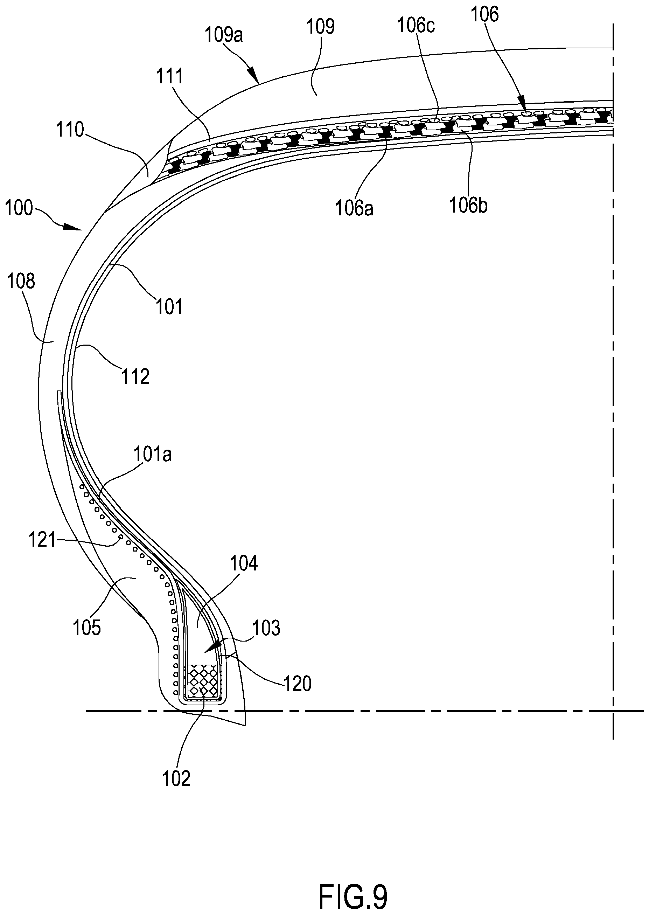

A tyre 100, obtained in said plant and according to the process in accordance with the present invention, is illustrated in figure 9 and comprises at least one carcass structure, comprising at least one carcass layer 101 having respectively opposite terminal edges engaged with respective annular anchoring structures 102, termed bead cores, possibly associated with a bead filler 104. The zone of the tyre comprising the bead core 102 and the bead filler 104 forms a bead structure 103, intended for anchoring the tyre on a corresponding mounting rim, not illustrated.

Each bead structure is associated with the carcass structure by means of the backward folding of the opposite lateral edges of the at least one carcass layer 101 around the annular anchoring structure 102 in a manner so as to form the so-called carcass flaps 101a.

An anti-abrasive strip 105 obtained with elastomeric material can be provided in an external position of each bead structure 103.

The carcass structure is associated with a belt structure 106 comprising one or more belt layers 106a, 106b situated in radial superimposition with respect to each other and with respect to the carcass layer, having metallic or textile reinforcement. Such reinforcement cords can have crossed orientation with respect to a circumferential extension direction of the tyre 100. By "circumferential" direction, it is intended a direction generically directed according to the tyre rotation direction. In radially more external position with respect to the belt layers 106a, 106b, at least one zero-degree reinforcement layer 106c can be applied, commonly known as "0° belt", which generally incorporates a plurality of reinforcement cords, typically textile cords, oriented in a substantially circumferential direction, thus forming an angle of only a few degrees (for example an angle between about 0° and 6°) with respect to the equatorial plane of the tyre, and covered with an elastomeric material.

In radially outer position with respect to the belt structure 106, a tread band 109 is applied that is made of elastomeric compound. Respective sidewalls 108 made of elastomeric compound are also applied in axially outer position on the lateral surfaces of the carcass structure, each being extended from one of the lateral edges of the tread 109 up to the respective bead structure 103. In radially outer position, the tread band 109 has a rolling surface 109a intended to come into contact with the ground. Circumferential grooves, which are connected by transverse notches in a manner so as to define a plurality of blocks of various shape and size distributed on the rolling surface 109a, are generally obtained in this surface 109a, which for the sake of simplicity in figure 9 is represented smooth.

An underlayer 111 can possibly be arranged between the belt structure 106 and the tread band 109. A strip constituted by elastomeric material 110, commonly known as "mini-sidewall", can possibly be present in the zone of connection between the sidewalls 108 and the tread band 109, this mini-sidewall being generally obtained by means of co-extrusion with the tread band 109 and allowing an improvement of the mechanical interaction between the tread band 109 and the sidewalls 108. Preferably the end portion of the sidewall 108 directly covers the lateral edge of the tread band 109.

In the case of tyres without air chamber, a rubber layer 112 - generally known as "liner", which provides the necessary impermeability to the inflation air of the tyre - can be provided in a radially inner position with respect to the carcass layer 101.

The rigidity of the tyre sidewall 108 can be improved by equipping the tyre bead structure 103 with a reinforcement layer 120 generally known as "flipper" o additional strip-like insert. The "flipper" 120 is a reinforcement layer which is wound around the respective annular anchoring structure 102 and the bead filler 104 in a manner so as to at least partially surround them, said reinforcement layer being arranged between the at least one carcass layer 101 and the bead structure 103. Normally, the "flipper" is in contact with said at least one carcass layer 101 and said bead structure 103. The "flipper" 120 typically comprises a plurality of metallic or textile cords (e.g. made of aramid or rayon) incorporated in a cross-linked elastomeric material.

The tyre bead structure 103 can comprise a further protection layer that is generally known with the term "chafer" 121 or protection strip and which has the function of increasing rigidity and integrity of the bead structure 103. The "chafer" 121 usually comprises a plurality of cords incorporated in a cross-linked elastomeric material. The cords are generally made of textile materials (e.g. aramid or rayon) or of metallic materials (e.g. steel cords).

The abovementioned components of the tyre 100 are built on one or more drums by moving said drums between different stations for supplying semifinished products; at each station, suitable devices apply the aforesaid semifinished products on the drum(s).

The plant 1, schematically illustrated in its entirety in the enclosed figure 1, comprises a carcass building line 2, at which forming drums 3 are moved between different stations for supplying semifinished products 4; such stations 4 are arranged to form, on each forming drum 3, a carcass sleeve comprising the carcass plies 101, the liner 112, the annular anchoring structures 102, the "flippers" 120, the "chafers" 121 and possibly at least one part of the sidewalls 108. Simultaneously, in an external sleeve building line 5, one or more auxiliary forming drums 6 are sequentially moved between different work stations 7 arranged to form an external sleeve on each auxiliary drum 6; such external sleeve comprising at least the belt structure 106, the tread band 109, and possibly at least one part of the sidewalls 108.

The plant 1 also comprises an assembly station 8, at which the external sleeve is coupled to the carcass sleeve, in order to define the built green tyre 100.

The built green tyres 100 are finally transferred to at least one shaping, moulding and vulcanising unit 9.

In at least one of the work stations 7 of the external sleeve building line 5, an apparatus can be provided for delivering and controlling a continuous elongated element 11 made of elastomeric material, which provides for delivering and applying said continuous elongated element 11 on a radially outer surface with respect to an auxiliary forming drum 6 according to axially side-by-side or partially superimposed circumferential coils, in order to form the zero-degree reinforcement layer 106c of the belt structure 106 of the tyre 100.

The continuous elongated element 11 (illustrated in detail in figure 10) comprises a plurality of parallel and side-by-side reinforcement cords 12 immersed in an elastomeric material matrix 13.

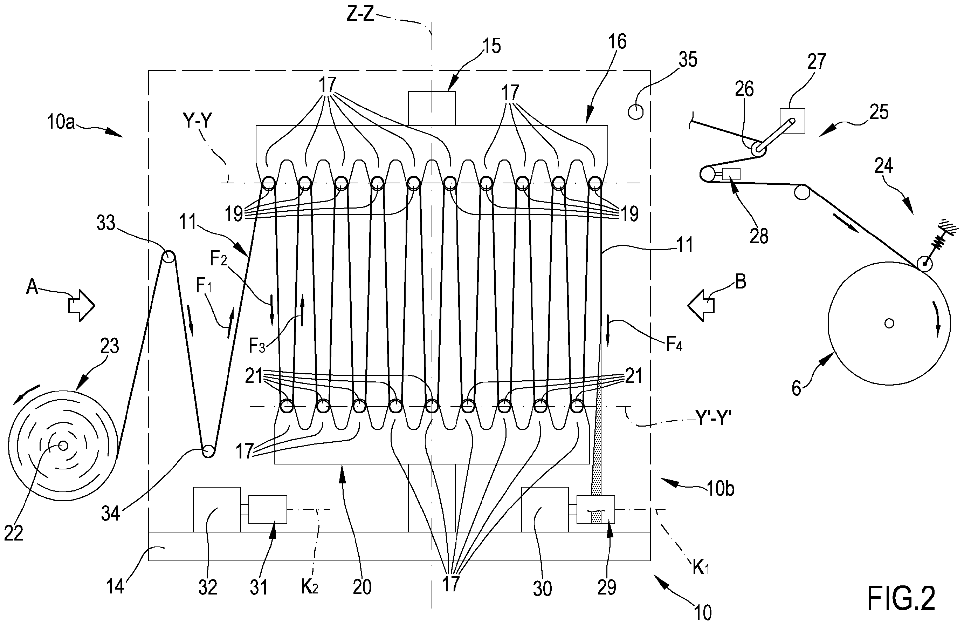

The apparatus (illustrated in figures 2 to 8) comprises a dynamic storage device 10 capable of housing and advancing a section of the continuous elongated element 11 like a festoon along a zigzag path.

The dynamic storage device 10 comprises a base 14 from which a support guide 15 shaped like a column is extended along a vertical axis "Z-Z".

An upper support bar 16 is constrained to the support guide 15 in a manner so as to be able to vertically slide along the abovementioned vertical axis "Z-Z"; such upper support bar 16 has a main extension along a horizontal axis "Y-Y", i.e. orthogonal to the support guide 15. The upper support bar 16 is constrained to the support guide 15 at an intermediate portion thereof. The upper support bar 16 has a plurality of appendages 17 that are extended towards the base 14 in a manner so as to confer a shape similar to that of a comb to the bar 16 itself.

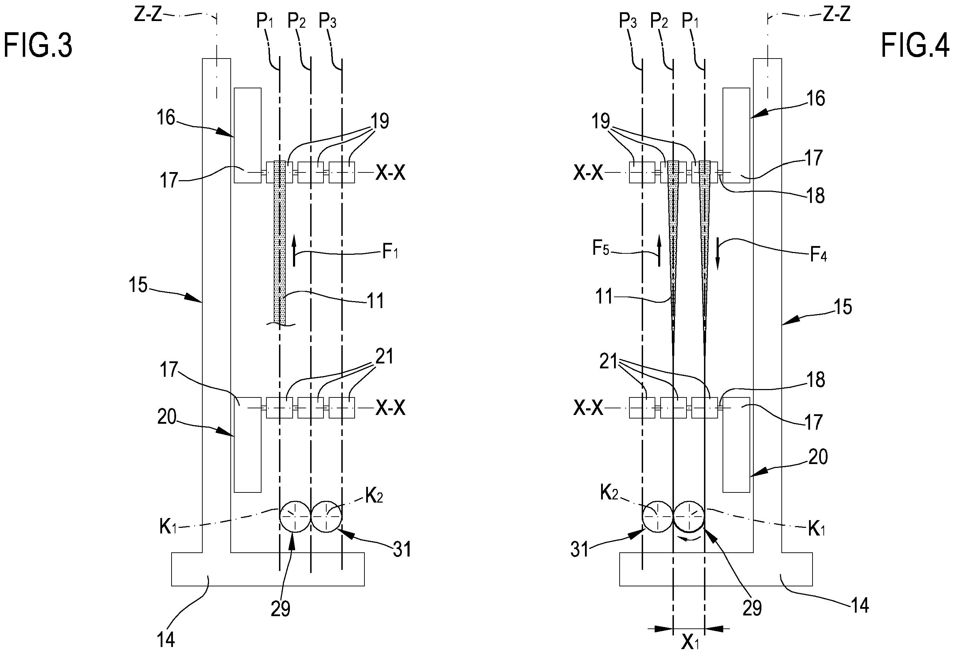

Each of the appendages 17 carries a rotation shaft 18 (visible in figures 3, 4, 6 and 8) which is extended along a corresponding rotation axis "X-X" perpendicular both to the abovementioned vertical axis "Z-Z" and to the abovementioned horizontal axis "Y-Y". The rotation shafts 18 of the upper support bar 16 are mutually side-by-side at regular intervals along the abovementioned horizontal axis "Y-Y".

Each of the rotation shafts 18 of the upper support bar 16 carries three upper rollers 19 aligned along the respective rotation axis "X-X" (corresponding idle rollers). Each upper roller 19 is idly mounted on the respective rotation shaft 18 by means of bearings, for example. The upper idle rollers 19 are preferably all identical.

The support guide 15 is also constrained, in a manner such that it can vertically slide along the abovementioned vertical axis "Z-Z", to a lower support bar 20 which also has a main extension along a horizontal axis "Y'-Y"', i.e. orthogonal to the support guide 15. The lower support bar 20 is arranged below the upper support bar 16 and it too is constrained to the support guide 15 at an intermediate portion thereof.

In a manner similar to the upper support bar 16, also the lower support bar 20 has a plurality of appendages 17 that are however extended upward, i.e. towards the upper support bar 16, in a manner so as to confer it a shape similar to that of a comb.

Each of the appendages 17 of the lower support bar 20 carries a rotation shaft 18 (visible in figures 3, 4, 6 and 8) which is extended along a corresponding rotation axis "X-X" perpendicular both to the abovementioned vertical axis "Z-Z" and to the abovementioned horizontal axis "Y'-Y"'. The rotation shafts 18 of the lower support bar 20 are mutually side-by-side at regular intervals along the abovementioned horizontal direction "Y'-Y"'.

Each of the rotation shafts 18 of the lower support bar 20 carries three lower rollers 21 (corresponding idle rollers) aligned along the respective rotation axis "X-X". Each lower roller 21 is idly mounted on the respective rotation shaft 18 by means of bearings, for example. The lower idle rollers 21 are preferably all identical and are identical to the upper idle rollers 19.

As is visible in figures 2, 5 and 7, the upper idle rollers 19 are vertically non-aligned with the lower idle rollers 21. In other words, each of the lower idle rollers 21 is aligned, along a vertical direction, with a space delimited between two adjacent upper idle rollers 19.

The set of upper idle rollers 19 and lower idle rollers 21 that lie closer to the support bars 16, 20 form a first group of idle rollers 19, 21 which defines a respective first section of the zigzag path lying on a first plane "P1" (figures 3, 4, 6 and 8), as will be described in detail hereinbelow.

The set of the upper idle rollers 19 and lower idle rollers 21 axially adjacent to those of the first group defines a respective second section of the zigzag path lying on a second plane "P2" (figures 3, 4, 6 and 8), as will be described in detail hereinbelow.

The set of the upper idle rollers 19 and lower idle rollers 21 axially adjacent to those of the second group and spaced from the support bars 16, 20 defines a respective third section of the zigzag path lying on a third plane "P3" (figures 3, 4, 6 and 8), as will be described in detail hereinbelow.

Each of the abovementioned planes "P1", "P2", "P3" passes through an axially intermediate portion of an axially outer surface of each of the idle rollers 19, 21, and on such intermediate portion the continuous elongated element 11 is abutted.

Mechanisms that are *per se* known, and thus are not illustrated or described herein, connect the upper support bar 16 to the lower support bar 20 in a manner such that their two weights balance each other. In the absence of forces that stress them, i.e. if they are only subjected to their own weight, the two support bars 16, 20 remain in equilibrium on the support guide without being moved upward or downward. The constraint is such that by moving the upper support bar 16 (or lower support bar 20) upward, the lower support bar 20 (or upper support bar 16) is simultaneously and symmetrically moved downward and vice versa. An actuator, preferably pneumatic, is capable of exerting a force on the upper support bar 16 (and/or on the lower support bar 20) in a manner so as to push said support bars 16, 20 simultaneously away from each other.

The apparatus comprises a support pin 22 positioned on a first side 10a of the dynamic storage device 10, adapted to receive a reel 23 of the continuous elongated element 11.

An applicator 24 (for example an applicator roller) is positioned on a second side 10b of the dynamic storage device 10 and is operatively active on the forming drum 6 in order to apply the continuous elongated element 11 on said forming drum 6.

Between the dynamic storage device 10 and the applicator 24, an extraction device 25 is present which comprises an extraction roller 26 coupled to a traction motor 27 and to a traction sensor 28.

The dynamic storage device 10 is provided with a first drive element 29, defined by a first drive roller, coupled to a motor 30. The first drive roller 29 and the respective motor 30 are placed on the base 14 below end idle rollers 19, 21 positioned at the second side 10b of the dynamic storage device 10. The rotation axis "K1" of the first drive roller 29 is parallel to the ground, i.e. to the horizontal axes "Y-Y", "Y'-Y"', and perpendicular to the rotation axes "X-X" of the idle rollers 19, 21. The rotation axis "K1" of the first drive roller 29 is also arranged at an intermediate point between the first plane "P1" and the second plane "P2". In addition, the diameter "d1" of the first drive roller 29 is substantially equal to the axial distance "x1" between the first plane "P1" and the second plane "P2", i.e. to the axial pitch between the rollers 19, 21 belonging to the first group and the adjacent rollers 19, 21 belonging to the second group. In this manner, the first plane "P1" and the second plane "P2" are substantially tangent to a radially outer surface of the first drive roller 29.

The dynamic storage device 10 is provided with a second drive element 31, defined by a second drive roller, coupled to a motor 32. The second drive roller 31 and the respective motor 32 are placed on the base 14 below end idle rollers 19, 21, positioned at the first side 10a of the dynamic storage device 10. The rotation axis "K2" of the second drive roller 31 is parallel to the ground, i.e. to the horizontal axes "Y-Y", "Y'-Y"', and perpendicular to the rotation axes "X-X" of the idle rollers 19, 21. The rotation axis "K2" of the second drive roller 31 is also arranged at an intermediate point between the second plane "P2" and the third plane "P3". The first drive roller 29 and the second drive roller 31 are therefore mutually offset. In addition, the diameter "d2" of the second drive roller 31 is substantially equal to the axial distance "x2" between the second plane "P2" and the third plane "P3", i.e. to the axial pitch between the rollers 19, 21 belonging to the second group and the adjacent rollers 19, 21 belonging to the third group. In this manner, the second plane "P2" and the third plane "P3" are substantially tangent to a radially outer surface of the second drive roller 31.

The motors 30, 32 of the drive rollers 29, 31 are of electric type, they are programmable and are configured for delivering a torque proportional to the rotation speed "ω" of the motor/drive roller 29, 31. Preferably, the torque of each of the motors 30, 32 is linearly varied with the rotation speed "ω" of the respective drive roller 29, 31. Such motors 30, 32 deliver, for example, a maximum torque comprised between about 5 Nm and about 10 Nm.

The path followed by the continuous elongated element 11 is the following.

As illustrated in figure 2, the continuous elongated element 11 unwound from the reel 23 is partially wound around a first upper transmission roller 33 and a second lower transmission roller 34, positioned for example in proximity of the second drive roller 31. The continuous elongated element 11 then ascends (arrow "F1" in figures 2 and 3) towards an upper end idle roller 19 close to the first side 10a and belonging to the first group along the first plane "P1".

After having passed over the upper idle roller 19, the continuous elongated element 11 descends (arrow "F2" in figure 2) towards a lower end idle roller 21 close to the first side 10a always belonging to the first group before then re-ascending (arrow "F3" in figure 2) towards a successive upper idle roller 19 belonging to the same first group. The continuous elongated element 11 continues in its winding extension on the first plane "P1" up to an upper end idle roller 19 close to the second side 10b and axially close to the upper support bar 16 (thus defining the first section of the zigzag path fully illustrated in figure 2).

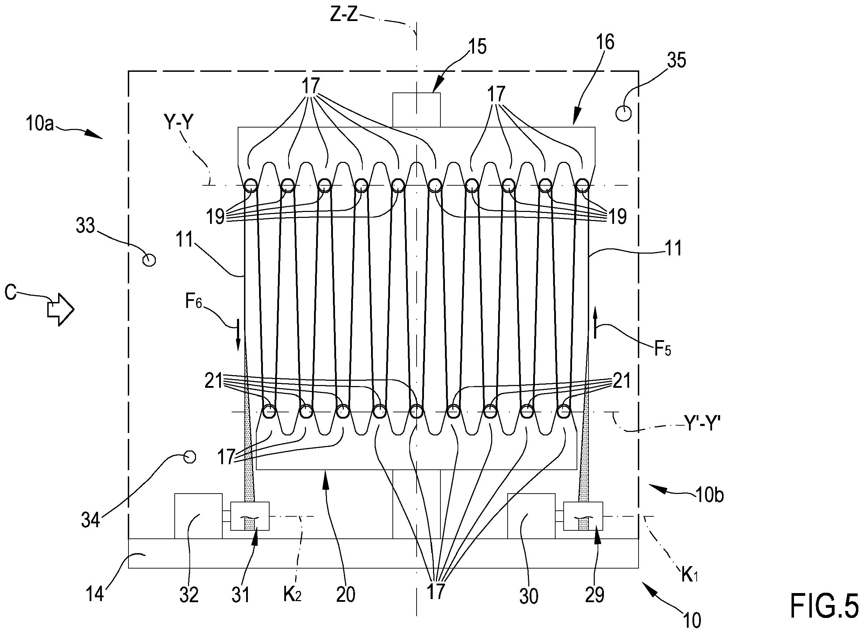

At this point, the continuous elongated element 11 descends, being twisted, to the first drive roller 29 that lies on the base 14 (arrow "F4" of figures 2 and 4), is wound below said first drive roller 29 according to an angle of about 180° and vertically re-ascends, being twisted, on the side opposite the second drive roller 29 towards an upper end idle roller 19 close to the second side 10b and belonging to the second group (arrow "F5" of figures 4 and 5).

As illustrated in figure 5, the continuous elongated element 11 continues in its winding extension on the second plane "P2" up to an upper end idle roller 19 close to the first side 10a (thus defining the second section of the zigzag path fully illustrated in figure 5).

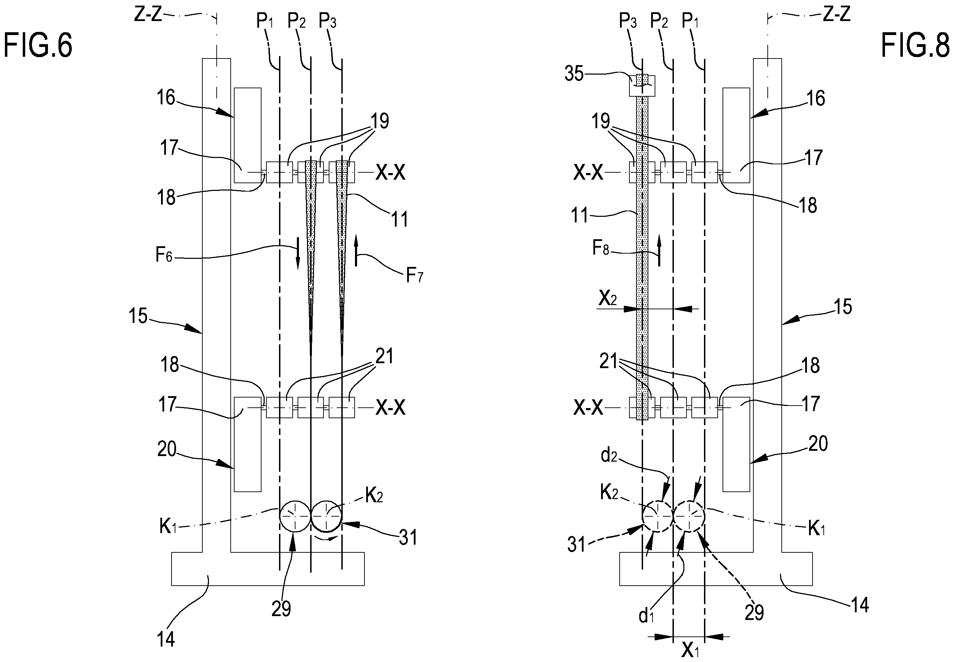

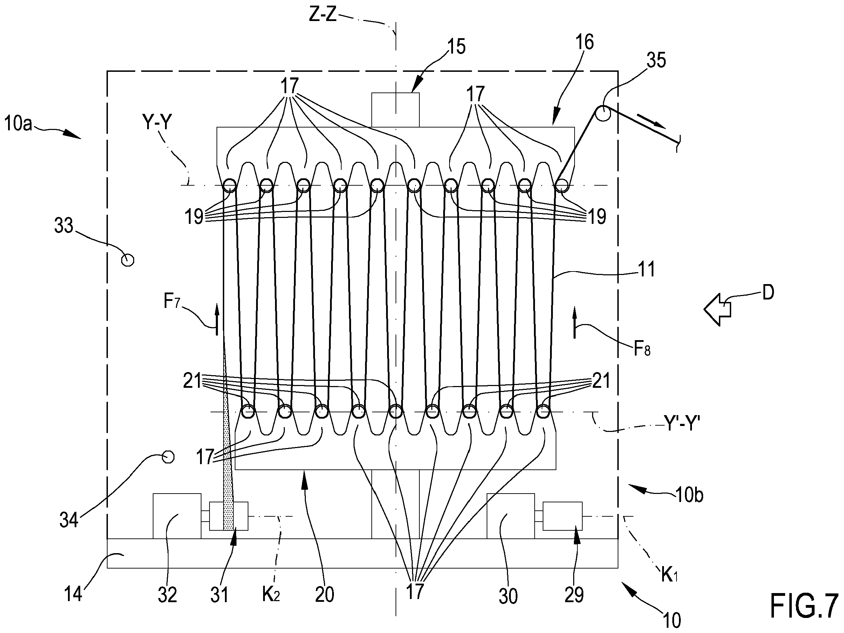

At this point, the continuous elongated element 11 descends, being twisted, to the second drive roller 31 which lies on the base 14 (arrow "F6" in figures 5 and 6), is wound below said second drive roller 31 according to an angle of about 180° and vertically re-ascends, being twisted, on the opposite side of the second drive roller 31 towards an upper end idle roller 19 close to the first side 10a and belonging to the third group (arrow "F7" of figures 6 and 7).

As illustrated in figure 7, the continuous elongated element 11 continues in its winding extension on the third plane "P3" by finally re-ascending (arrow "F8" of figures 7 and 8) towards an upper end idle roller 19 close to the second side 10b (thus defining the third section of the zigzag path fully illustrated in figure 7).

Subsequently, the continuous elongated element 11 leaves the dynamic storage device 10 by being partially wound around a third transmission roller 35 (figures 7 and 8) which directs it towards the extraction device 25 and the applicator 24 (illustrated in figure 2).

During use and in accordance with the process and the method of the present invention, after the elongated element 11 has been laid along the zigzag path on the idle rollers 19, 21, around the extraction roller 26 and between the applicator 24 and the forming drum 6, the winding is started by rotating the forming drum 6. With its action, the extraction roller 26 extracts the continuous elongated element 11 from the dynamic storage device 10 and feeds it towards the forming drum 6. A feed roller can also be present (not illustrated, but for example it can be situated in place of the first transmission roller 33) which unwinds the elongated element from the reel 23 and feeds it towards the dynamic storage device 10. The continuous elongated element 11 therefore advances in a feed direction (arrows "F1"-"F8") along the zigzag path. The advancing speed "V" of the continuous elongated element 11 along the zigzag path is equal to about 120 m/min, for example.

The actuator pushes the lower support bar 20 and the upper support bar 16 away from each other, maintaining a pre-set longitudinal static force in the continuous elongated element 11. The abovementioned longitudinal static force is also present when the elongated element 11 is immobile on the rollers 19, 21, i.e. it does not advance in the feed direction, and the value of the longitudinal static force is constant over the entire length of said element.

When the continuous elongated element 11 is moved, the support bars 16, 20 have a relative movement with respect to each other, which is small or large depending on the mode of use.

If the dynamic storage device 10 is only storing (no exiting material), the support bars 16, 20 are moved away from each other.

If the dynamic storage device 10 is only releasing (no entering material), the support bars 16, 20 are mutually moved close to each other.

If the dynamic storage device 10 is working simultaneously with the continuous elongated element 11 moving, both entering and exiting, the two support bars 16, 20 are mutually moved the extent necessary to compensate for the possible differences in speed between entering material and exiting material. If the speeds of the entering and exiting continuous elongated element 11 are equal, the two support bars 16, 20 remain stopped.

Considering the latter operative condition, one adds to/subtracts from the longitudinal static force the force which increases substantially in a linear manner in each section of the continuous elongated element 11 due to the driving operated downstream of the zigzag path by the extraction device 25 and the friction forces distributed along the zigzag path. In realty such growth occurs progressively, in steps, and each step is placed at an idle roller 19, 21, which transmits to the continuous elongated element 11 a longitudinal force due to the rolling friction of the bearing interposed between the roller 19, 21 and the shaft 18 on which it is mounted and/or due to the inertia of the roller 19, 21 itself.

Between the first section and the subsequent second section, however, the presence of the first drive roller 29 - which rotates in one sense in accordance with the feed direction (arrows "F1"-"F8") of the continuous elongated element 11 and therefore it drives such element in said direction - lowers the longitudinal force which then progressively increases once again along the second section up to the second drive roller 31, at which there is a new sudden fall. The longitudinal force then progressively grows up to the outlet of the temporary storage device 10. The difference of longitudinal force between the inlet in the first section and outlet from the last section is however limited due to the presence of the drive rollers 29, 31. For example, the longitudinal force "Tᵢₙ" exerted on the continuous elongated element 11 at an inlet of said elongated element 11 in the zigzag path is equal to about 20 N. The longitudinal static force "Tout" exerted on the continuous elongated element 11 at an outlet of said elongated element 11 from the zigzag path is equal to about 50 N. The difference of longitudinal force "ΔT" exerted on the continuous elongated element 11 between an inlet of said continuous elongated element 11 into the zigzag path and an outlet 11 from the zigzag path is equal to about 30 N. Each of the drive rollers 19, 21 applies a drive torque "C_{d}" which is translated into a drive force "F_{d}" applied to the continuous elongated element 11 in the feed direction and reduces the longitudinal tension "σd" in the continuous elongated element 11 downstream of said drive point with respect to the longitudinal tension "σu" upstream of said drive point. Such drive torque "C_{d}" is comprised between about 1 Nm and about 3 Nm. Such drive force "F_{d}" (which corresponds to the sudden drop of the longitudinal force) is comprised between about 20 N and 30 N. If the advancing speed of the continuous elongated element 11 is increased, the motors 30, 32 increase the drive torque "C_{d}" and thus the drive force "F_{d}" in a manner so as to still maintain the longitudinal force at the outlet "Tout" within acceptable values.

It is also possible to increase the number of drive rollers and thus the number of drive points if a very high speed is required for advancing the continuous elongated element for a specific process.

It is also possible to proportionally increase the number of drive rollers and thus drive points and/or the drive force "F_{d}" for each drive roller by selecting suitably sized motors, if the length of the continuous elongated element 11 managed in the dynamic storage device 10 (and hence the number of idle rollers) is very high.

Reported in the following table is a simulated comparison carried out on a dynamic storage device comprising 66 idle rollers for an extension of the zigzag path of about 112 m and a height of each loop (about equal to the distance between the upper idle rollers and lower idle rollers) of about 1.7 m. The continuous elongated element 11 was made to advance in both tests with an average speed of about 120 m/min. The table reports the values of longitudinal force in the continuous elongated element at the inlet and outlet in the subsequent three sections of the zigzag path.

| Position | Length of festoon (m) | A (reference, no drive rollers) | | B (two drive rollers, each applies a drive force of about 20 N) | |
|---|---|---|---|---|---|
| | | Drive force (N) | Longitudinal force (N) | Drive force (N) | Longitudinal force (N) |
| Inlet 1° section | 0 | 0 | 24.2 | 0 | 24.2 |
| Outlet 1° section | 37.4 | 0 | 45.7 | 0 | 45.7 |
| Inlet 2° section | 37.4 | 0 | 45.7 | 20 | 25.7 |
| Middle 2° section | 56.1 | 0 | 56.5 | 20 | 36.5 |
| Outlet 2° section | 74.8 | 0 | 67.3 | 20 | 47.3 |
| Inlet 3° section | 74.8 | 0 | 67.3 | 40 | 27.3 |
| Outlet 3° section | 112.2 | 0 | ***88.8*** | 40 | ***48.8*** |

In test "A" (reference), the drive rollers 29, 30 according to the present invention are not used. As is observed, the longitudinal force at the outlet of the third section, i.e. at the outlet of the temporary storage device, is about 90 N.

In the simulation "B", each of the motors associated with the two above-described drive rollers 29, 30 applies (at an advancing speed of the continuous elongated element of about 120 m/min) a torque capable of generating a drive force of about 20 N. As can be observed, between the outlet of the 1° section and the inlet in the 2° section, the action of the first drive roller 29 positioned herein causes a decrease of the longitudinal force of 20 N and between the outlet of the 2° section and the inlet in the 3° section, the action of the second drive roller 31 positioned herein causes a decrease of the longitudinal force of additional 20 N. It follows that the longitudinal force at the outlet of the third section, i.e. at the outlet of the temporary storage device, is slightly less than 50 N.

## Claims

1. Process for building tyres for vehicle wheels, comprising:
- building a green tyre (100) by forming its components on at least one forming drum (6);
- moulding and vulcanising the green tyre (100);
wherein forming at least one of the components of the green tyre (100) comprises:
- advancing a continuous elongated element (11) towards the forming drum (6) along a zigzag path defined by a plurality of idle rollers (19, 21) on which said continuous elongated element (11) is partially wound;
- applying said continuous elongated element (11) on said forming drum (6);
**characterized in that**, during the movement through the zigzag path, said continuous elongated element (11) is partially wound around at least one drive element (29, 31) operatively interposed between the idle rollers (19, 21), said drive element (29, 31) being moved in rotation by a motor (30, 32) in one sense in accordance with a feed direction (F1-F8) of the continuous elongated element (11) through said path;
wherein a torque (C_{d}) is applied at at least one drive element (29, 31) placed along said zigzag path, in a manner such that the continuous elongated element (11) is conducted in the feed direction (F1-F8) and that the longitudinal tension (σ_{d}) in the continuous elongated element (11) downstream of said drive element (29, 31) is reduced with respect to the longitudinal tension (σᵤ) upstream of said drive element (29, 31).

2. Process as claimed in claim 1, comprising: controlling the torque (C_{d}) of the motor (30, 32) in a manner proportional to the rotation speed (ω) of the drive element (29, 31).

3. Process as claimed in claim 1, comprising: increasing the applied torque (C_{d}) in proportion to the advancing speed (V) of the continuous elongated element (11).

4. Process as claimed in claim 1, comprising: increasing the applied torque (C_{d}) in proportion to the number of idle rollers (19, 21).

5. Process as claimed in claim 1, comprising: increasing the drive elements (29, 31) in proportion to the advancing speed (V) of the continuous elongated element (11).

6. Process as claimed in claim 1, comprising: increasing the drive elements (29, 31) in proportion to the number of idle rollers (19, 21).

7. Process as claimed in claim 1, wherein an advancing speed (V) of the continuous elongated element (11) along the zigzag path is greater than about 100 m/min.

8. Apparatus for controlling the delivery of a continuous elongated element in a process for building tyres, comprising:
- a dynamic storage device (10) comprising a plurality of idle rollers (19, 21) defining a zigzag path for said continuous elongated element (11);
- at least one feed reel (23) on which said continuous elongated element (11) is wound, said reel (23) being placed upstream of the dynamic storage device (10);
wherein said dynamic storage device (10) comprises at least one drive element (29, 31) coupled to a motor (30, 32),
**characterized in that** said at least one drive element (29, 31) is operatively interposed between the idle rollers (19, 21) in order to divide the zigzag path into at least two successive sections,
wherein said at least one drive element (29, 31) is adapted to be rotated in one sense in accordance with a feed direction (F1-F8) of the continuous elongated element (11) through said path;
wherein a torque (C_{d}) is applied at at least one drive element (29, 31) placed along said zigzag path, in a manner such that the continuous elongated element (11) is conducted in the feed direction (F1-F8) and that the longitudinal tension (σ_{d}) in the continuous elongated element (11) downstream of said drive element (29, 31) is reduced with respect to the longitudinal tension (σᵤ) upstream of said drive element (29, 31).

9. Apparatus as claimed in claim 8, wherein the idle rollers (19, 21) are organised in at least two axially approached groups with reference to an axial direction parallel to rotation axes (X-X, X'-X') of said idle rollers (19, 21), wherein each of said at least two groups defines one of said subsequent sections.

10. Apparatus as claimed in one of the preceding claims 8 or 9, wherein said at least one drive element (29, 31) has a rotation axis (K1, K2) orthogonal to rotation axes (X-X, X'-X') of the idle rollers (19, 21).

11. Apparatus as claimed in claim 9 or 10, wherein said at least one drive element (29, 31) has an external diameter (d1, d2) substantially equal to an axial pitch (x1, x2) between an idle roller (19, 21) of one group and the corresponding idle roller (19, 21) of an axially adjacent group.

12. Apparatus as claimed in one of the claims from 8 to 11, wherein said at least one drive element (29, 31) is axially placed between two of said groups.

13. Apparatus as claimed in one of the preceding claims 8 to 12, wherein the dynamic storage device (10) comprises:
a base (14);
an upper support bar (16) mounted above the base (14) and carrying upper idle rollers (19) of said plurality of idle rollers (19, 21);
a lower support bar (20) mounted above the base (14) and carrying lower idle rollers (21) of said plurality of idle rollers (19, 21);
wherein said at least one drive element (29, 31) is arranged on the base (14), substantially below the lower support bar (20).

14. Apparatus as claimed in claim 13, wherein the zigzag path is extended between the upper support bar (16) and the lower support bar (20) in at least one first section which extends from a first side (10a) to a second side (10b) of the dynamic storage device (10) and in a second section which extends from the second side (10b) to the first side (10a) of the dynamic storage device (10).

15. Apparatus as claimed in claim 14, wherein the zigzag path is extended between the upper support bar (16) and the lower support bar (20) in a third section which extends from the first side (10a) to the second side (10b) of the dynamic storage device (10), wherein a first drive element (29) is arranged on the base (14), below end idle rollers (19, 21) placed at the second side (10b) of the dynamic storage device (10); wherein a second drive element (31) is arranged on the base (14), below end idle rollers (19, 21) placed at the first side (10a) of the dynamic storage device (10).

## Patentansprüche

1. Verfahren zur Herstellung von Reifen für Fahrzeugräder, umfassend:
- Fertigen eines Rohreifens (100) durch Formen seiner Komponenten an zumindest einer Formungstrommel (6);
- Formen und Vulkanisieren des Rohreifens (100);
wobei das Formen zumindest einer der Komponenten des Rohreifens (100) umfasst:
- Vorschieben eines durchgehenden länglichen Elements (11) zu der Formungstrommel (6) hin entlang eines zickzackförmigen Pfads, der durch eine Vielzahl von Laufrollen (19, 21), auf welche das durchgehende längliche Element (11) teilweise gewickelt ist, definiert wird;
- Anlegen des durchgehenden länglichen Elements (11) an die Formungstrommel (6);
**dadurch gekennzeichnet, dass** während der Bewegung durch den zickzackförmigen Pfad das durchgehende längliche Element (11) teilweise um zumindest ein Antriebselement (29, 31) gewickelt ist, das wirkmäßig zwischen den Laufrollen (19, 21) angeordnet ist, wobei das Antriebselement (29, 31) durch einen Motor (30, 32) in einer Richtung in Übereinstimmung mit einer Zuführrichtung (F1-F8) des durchgehenden länglichen Elements (11) durch diesen Pfad drehend bewegt wird;
wobei ein Drehmoment (C_{d}) auf zumindest ein Antriebselement (29, 31) ausgeübt wird, das entlang des zickzackförmigen Pfads angeordnet ist, auf solche Weise, dass das durchgehende längliche Element (11) in der Zuführrichtung (F1-F8) geführt wird, und dass die Längsspannung (σ_{d}) in dem durchgehenden länglichen Element (11) stromabwärts des Antriebselements (29, 31) in Bezug auf die Längsspannung (σᵤ) stromaufwärts des Antriebselements (29, 31) verringert ist.

2. Verfahren nach Anspruch 1, umfassend die folgenden Schritte: Steuern des Drehmoments (C_{d}) des Motors (30, 32) auf eine Weise, die zur Drehzahl (ω) des Antriebselements (29, 31) proportional ist.

3. Verfahren nach Anspruch 1, umfassend die folgenden Schritte: Erhöhen des ausgeübten Drehmoments (C_{d}) proportional zu der Vorschubgeschwindigkeit (V) des durchgehenden länglichen Elements (11).

4. Verfahren nach Anspruch 1, umfassend die folgenden Schritte: Erhöhen des ausgeübten Drehmoments (C_{d}) proportional zu der Anzahl der Laufrollen (19, 21).

5. Verfahren nach Anspruch 1, umfassend die folgenden Schritte: Erhöhen der Antriebselemente (29, 31) proportional zu der Vorschubgeschwindigkeit (V) des durchgehenden länglichen Elements (11).

6. Verfahren nach Anspruch 1, umfassend die folgenden Schritte: Erhöhen der Antriebselemente (29, 31) proportional zu der Anzahl der Laufrollen (19, 21).

7. Verfahren nach Anspruch 1, wobei eine Vorschubgeschwindigkeit (V) des durchgehenden länglichen Elements (11) entlang des zickzackförmigen Pfades höher als etwa 100 m/min ist.

8. Vorrichtung zur Steuerung der Zufuhr eines durchgehenden länglichen Elements in einem Verfahren zur Fertigung von Reifen, umfassend:
- eine dynamische Speichereinrichtung (10) umfassend eine Vielzahl von Laufrollen (19, 21), die einen zickzackförmigen Pfad für das durchgehende längliche Element (11) definieren;
- zumindest eine Zufuhrspule (23), auf welche das durchgehende längliche Element (11) gewickelt ist, wobei die Spule (23) stromaufwärts der dynamischen Speichereinrichtung (10) platziert ist;
wobei die dynamische Speichereinrichtung (10) zumindest ein mit einem Motor (30, 32) gekoppeltes Antriebselement (29, 31) umfasst,
**dadurch gekennzeichnet, dass** das zumindest eine Antriebselement (29, 31) wirkmäßig zwischen den Laufrollen (19, 21) angeordnet ist, um den zickzackförmigen Pfad in zumindest zwei aufeinander folgende Segmente zu unterteilen,
wobei das zumindest eine Antriebselement (29, 31) dazu geeignet ist, in einer Richtung in Übereinstimmung mit einer Zuführrichtung (F1-F8) des durchgehenden länglichen Elements (11) durch den Pfad gedreht zu werden;
wobei ein Drehmoment (C_{d}) auf zumindest ein Antriebselement (29, 31) ausgeübt wird, das entlang des zickzackförmigen Pfads angeordnet ist, auf solche Weise, dass das durchgehende längliche Element (11) in der Zuführrichtung (F1-F8) geführt wird, und dass die Längsspannung (σ_{d}) in dem durchgehenden länglichen Element (11) stromabwärts des Antriebselements (29, 31) in Bezug auf die Längsspannung (σᵤ) stromaufwärts des Antriebselements (29, 31) verringert ist.

9. Vorrichtung nach Anspruch 8, wobei die Laufrollen (19, 21) in zumindest zwei axial angenäherten Gruppen in Bezug auf eine axiale Richtung parallel zu den Drehachsen (X-X, X'-X') der Laufrollen (19, 21) organisiert sind, wobei jede der zumindest zwei Gruppen eine der aufeinander folgenden Segmente definiert.

10. Vorrichtung nach einem der vorhergehenden Ansprüche 8 oder 9, wobei das zumindest eine Antriebselement (29, 31) eine Drehachse (K1, K2) aufweist, die im rechten Winkel zu den Drehachsen (X-X, X'-X') der Laufrollen (19, 21) steht.

11. Vorrichtung nach Anspruch 9 oder 10, wobei das zumindest eine Antriebselement (29, 31) einen äußeren Durchmesser (d1, d2) aufweist, der im Wesentlichen gleich dem axialen Abstand (x1, x2) zwischen einer Laufrolle (19, 21) einer Gruppe und der entsprechenden Laufrolle (19, 21) einer axial benachbarten Gruppe ist.

12. Vorrichtung nach einem der Ansprüche 8 bis 11, wobei das zumindest eine Antriebselement (29. 31) axial zwischen zwei der Gruppen platziert ist.

13. Vorrichtung nach einem der vorhergehenden Ansprüche 8-12, wobei die dynamische Speichereinrichtung (10) umfasst:
eine Basis (14);
einen oberen Tragbalken (16), der über der Basis (14) montiert ist und obere Laufrollen (19) der Vielzahl von Laufrollen (19, 21) trägt;
einen unteren Tragbalken (20), der über der Basis (14) montiert ist und untere Laufrollen (21) der Vielzahl von Laufrollen (19, 21) trägt;
wobei das zumindest eine Antriebselement (29, 31) auf der Basis (14), im Wesentlichen unter dem unteren Tragbalken (20) angeordnet ist.

14. Vorrichtung nach Anspruch 13, wobei der zickzackförmige Pfad sich zwischen dem oberen Tragbalken (16) und dem unteren Tragbalken (20) in zumindest einem ersten Segment erstreckt, das sich von einer ersten Seite (10a) bis zu einer zweiten Seite (10b) der dynamischen Speichereinrichtung (10) erstreckt, sowie in einem zweiten Segment, das sich von der zweiten Seite (10b) bis zu der ersten Seite (10a) der dynamischen Speichereinrichtung (10) erstreckt.

15. Vorrichtung nach Anspruch 14, wobei der zickzackförmige Pfad sich zwischen dem oberen Tragbalken (16) und dem unteren Tragbalken (20) in einem dritten Segment erstreckt, das sich von der ersten Seite (10a) bis zu der zweiten Seite (10b) der dynamischen Speichereinrichtung (10) erstreckt, wobei ein erstes Antriebselement (29) an der Basis (14) unterhalb endständiger Laufrollen (19, 21) angeordnet ist, die auf der zweiten Seite (10b) der dynamischen Speichereinrichtung (10) platziert sind; wobei ein zweites Antriebselement (31) an der Basis (14) unter endständigen Laufrollen (19, 21) angeordnet ist, die auf der ersten Seite (10a) der dynamischen Speichereinrichtung (10) platziert sind.

## Revendications

1. Procédé de construction de pneus pour roues de véhicule, comprenant le fait :
- de construire un pneu cru (100) en formant ses composants sur au moins un tambour de formation (6) ;
- de mouler et de vulcaniser le pneu cru (100) ;
dans lequel la formation d'au moins l'un des composants du pneu cru (100) comprend le fait :
- de faire avancer un élément allongé continu (11) vers le tambour de formation (6) le long d'un trajet en zigzag défini par une pluralité de galets libres (19, 21) sur lesquels ledit élément allongé continu (11) est partiellement enroulé ;
- d'appliquer ledit élément allongé continu (11) sur ledit tambour de formation (6) ;
**caractérisé en ce que**, pendant le déplacement à travers le trajet en zigzag, ledit élément allongé continu (11) est partiellement enroulé autour d'au moins un élément d'entraînement (29, 31) interposé de manière fonctionnelle entre les galets libres (19, 21), ledit élément d'entraînement (29, 31) étant déplacé en rotation par un moteur (30, 32) dans un sens selon une direction d'alimentation (F1-F8) de l'élément allongé continu (11) à travers ledit trajet ;
dans lequel un couple (C_{d}) est appliqué à au moins un élément d'entraînement (29, 31) placé le long dudit trajet en zigzag, de sorte que l'élément allongé continu (11) soit conduit dans la direction d'alimentation (F1-F8) et que la tension longitudinale (σ_{d}) dans l'élément allongé continu (11) en aval dudit élément d'entraînement (29, 31) soit réduite par rapport à la tension longitudinale (σᵤ) en amont dudit élément d'entraînement (29, 31).

2. Procédé tel que revendiqué dans la revendication 1, comprenant le fait : de commander le couple (C_{d}) du moteur (30, 32) de manière proportionnelle à la vitesse de rotation (ω) de l'élément d'entraînement (29, 31).

3. Procédé tel que revendiqué dans la revendication 1, comprenant le fait : d'augmenter le couple appliqué (C_{d}) proportionnellement à la vitesse d'avance (V) de l'élément allongé continu (11).

4. Procédé tel que revendiqué dans la revendication 1, comprenant le fait : d'augmenter le couple appliqué (C_{d}) proportionnellement au nombre de galets libres (19, 21).

5. Procédé tel que revendiqué dans la revendication 1, comprenant le fait : d'augmenter les éléments d'entraînement (29, 31) proportionnellement à la vitesse d'avance (V) de l'élément allongé continu (11).

6. Procédé tel que revendiqué dans la revendication 1, comprenant le fait : d'augmenter les éléments d'entraînement (29, 31) proportionnellement au nombre de galets libres (19, 21).

7. Procédé tel que revendiqué dans la revendication 1, dans lequel la vitesse d'avance (V) de l'élément allongé continu (11) le long du trajet en zigzag est supérieure à environ 100 m/min.

8. Appareil de commande de la distribution d'un élément allongé continu dans un procédé de construction de pneus, comprenant :
- un dispositif de stockage dynamique (10) comprenant une pluralité de galets libres (19, 21) définissant un trajet en zigzag pour ledit élément allongé continu (11) ;
- au moins une bobine d'alimentation (23) sur laquelle ledit élément allongé continu (11) est enroulé, ladite bobine (23) étant placée en amont du dispositif de stockage dynamique (10) ;
dans lequel ledit dispositif de stockage dynamique (10) comprend au moins un élément d'entraînement (29, 31) couplé à un moteur (30, 32),
**caractérisé en ce que** ledit au moins un élément d'entraînement (29, 31) est interposé de manière fonctionnelle entre les galets libres (19, 21) afin de diviser le trajet en zigzag en au moins deux sections successives,
dans lequel ledit au moins un élément d'entraînement (29, 31) est adapté pour tourner dans un sens selon une direction d'alimentation (F1-F8) de l'élément allongé continu (11) à travers ledit trajet ;
dans lequel un couple (C_{d}) est appliqué à au moins un élément d'entraînement (29, 31) placé le long dudit trajet en zigzag, de sorte que l'élément allongé continu (11) soit conduit dans la direction d'alimentation (F1-F8) et que la tension longitudinale (σ_{d}) dans l'élément allongé continu (11) en aval dudit élément d'entraînement (29, 31) soit réduite par rapport à la tension longitudinale (σᵤ) en amont dudit élément d'entraînement (29, 31).

9. Appareil tel que revendiqué dans la revendication 8, dans lequel les galets libres (19, 21) sont organisés en au moins deux groupes rapprochés axialement en référence à une direction axiale parallèle à des axes de rotation (X-X, X'-X') desdits galets libres (19, 21), où chacun desdits au moins deux groupes définit l'une desdites sections suivantes.

10. Appareil tel que revendiqué dans l'une des revendications précédentes 8 et 9, dans lequel ledit au moins un élément d'entraînement (29, 31) a un axe de rotation (K1, K2) orthogonal aux axes de rotation (X-X, X'-X') des galets libres (19, 21).

11. Appareil tel que revendiqué dans la revendication 9 ou 10, dans lequel ledit au moins un élément d'entraînement (29, 31) a un diamètre externe (d1, d2) essentiellement égal à un pas axial (x1, x2) entre un galet libre (19, 21) d'un groupe et le galet libre correspondant (19, 21) d'un groupe axialement adjacent.

12. Appareil tel que revendiqué dans l'une des revendications 8 à 11, dans lequel ledit au moins un élément d'entraînement (29, 31) est axialement placé entre deux desdits groupes.

13. Appareil tel que revendiqué dans l'une des revendications précédentes 8 à 12, dans lequel le dispositif de stockage dynamique (10) comprend :
une base (14) ;
une barre de support supérieure (16) montée au-dessus de la base (14) et portant des galets libres supérieurs (19) de ladite pluralité de galets libres (19, 21) ;
une barre de support inférieure (20) montée au-dessus de la base (14) et portant des galets libres inférieurs (21) de ladite pluralité de galets libres (19, 21) ;
dans lequel ledit au moins un élément d'entraînement (29, 31) est agencé sur la base (14), essentiellement en dessous de la barre de support inférieure (20).

14. Appareil tel que revendiqué dans la revendication 13, dans lequel le trajet en zigzag s'étend entre la barre de support supérieure (16) et la barre de support inférieure (20) dans au moins une première section qui s'étend à partir d'un premier côté (10a) vers un deuxième côté (10b) du dispositif de stockage dynamique (10) et dans une deuxième section qui s'étend à partir du deuxième côté (10b) vers le premier côté (10a) du dispositif de stockage dynamique (10).

15. Appareil tel que revendiqué dans la revendication 14, dans lequel le trajet en zigzag s'étend entre la barre de support supérieure (16) et la barre de support inférieure (20) dans une troisième section qui s'étend à partir du premier côté (10a) vers le deuxième côté (10b) du dispositif de stockage dynamique (10), où un premier élément d'entraînement (29) est agencé sur la base (14), en dessous de galets libres d'extrémité (19, 21) placés au deuxième côté (10b) du dispositif de stockage dynamique (10) ; où un deuxième élément d'entraînement (31) est agencé sur la base (14), en dessous des galets libres d'extrémité (19, 21) placés au premier côté (10a) du dispositif de stockage dynamique (10).
